Europäisches Patentamt

European Patent Office

Office européen des brevets

(19)

(11) Veröffentlichungsnummer: **0 416 488 A2**

(12) # EUROPÄISCHE PATENTANMELDUNG

(21) Anmeldenummer: 90116824.5

(51) Int. Cl.5: **H02M 7/515, H02M 1/06**

(22) Anmeldetag: 01.09.90

(30) Priorität: 08.09.89 DE 3929861
12.10.89 DE 3934044

(43) Veröffentlichungstag der Anmeldung:
**13.03.91 Patentblatt 91/11**

(84) Benannte Vertragsstaaten:
**AT DE DK IT NL SE**

(71) Anmelder: **Asea Brown Boveri
Aktiengesellschaft
Kallstadter Strasse 1**

**W-6800 Mannheim 31(DE)**

(72) Erfinder: **Peppel, Michael, Dr.
Rote Turmstrasse 16
W-6940 Weinheim(DE)**

(74) Vertreter: **Rupprecht, Klaus, Dipl.-Ing. et al
c/o Asea Brown Boveri Aktiengesellschaft
Zentralbereich Patente Postfach 100351
W-6800 Mannheim 1(DE)**

(54) Verfahren und Vorrichtung zur Bildung eines Löschsperrsignals für abschaltbare Leistungshalbleiter.

(57) Bei diesem Verfahren werden Löschsperrsignale (LS) für abschaltbar Leistungshalbleiter(V11...V32), insbesondere GTO-Thyristoren, in Stromrichtern gebildet, um unzulässige Löschversuche zu unterdrükken und die Leistungshalbleiter vor Zerstörung zu schützen. Ein Löschsperrsignal (LS) wird dann abgegeben, wenn die Summe aus dem aktuellen Laststrom (iph) einer Phase des Stromrichters und dem Produkt der zeitlichen Ableitung des Laststromes (diph/dt) und der maximalen Speicherzeit (TS) eines Leistungshalbleiters größer als der maximale, periodisch abschaltbare Anodenstrom (ITQ) eines Leistungshalbleiters ist. Desweiteren wird ein Löschsperrsignal abgegeben, wenn die zeitliche Ableitung eines Zweigstromes (di/dt) des Stromrichters einen Schwellwert proportional zu der dem Stromrichter zugeführten Spannung (UZK) überschreitet und folglich ein Kurzschluß des Stromrichters vorliegt.

Fig. 2

EP 0 416 488 A2

# VERFAHREN UND VORRICHTUNG ZUR BILDUNG EINES LÖSCHSPERRSIGNALS FÜR ABSCHALTBARE LEISTUNGSHALBLEITER

Die Erfindung bezieht sich auf ein Verfahren zur Bildung eines Löschsperrsignals für abschaltbare Leistungshalbleiter in Stromrichtern zur Unterdrückung von unzulässigen Löschversuchen und auf eine Vorrichtung hierzu.

Eine Anwendung ist z.B. bei GTO-Pulswechselrichtern für Traktionsantriebe möglich.

Ein solches Verfahren ist aus der DE-OS 37 27 996 bekannt. Das dort beschriebene Verfahren zur Unterdrückung von unzulässigen Löschversuchen bei abschaltbaren Leistungshalbleitern in Stromrichtern ist dadurch gekennzeichnet, daß eine sich aus dem aktuellen Anodenstrom bzw. Laststrom des Halbleiters und dem Produkt der zeitlichen Ableitung des aktuellen Anodenstromes und der maximalen Abschaltverzugszeit zusammensetzende Meßgröße gebildet und mit einem einstellbaren, maximal schaltbaren Anodenstrom verglichen wird, wobei auftretende Löschbefehle unterdrückt werden, wenn die gebildete Meßgröße den maximal schaltbaren Anodenstrom erreicht oder überschreitet.

GTO-Thyristoren sind abschaltbare Leistungshalbleiter für sehr hohe Leistungen. Sie können Ströme unterhalb eines Grenzwertes ITQ ( = periodisch abschaltbarer Anodenstrom eines GTO-Thyristors) abschalten, jedoch problemlos sehr viel höhere Ströme leiten, sofern kein Abschaltversuch unternommen wird. Daher ist es sinnvoll, die Abschaltung von GTO-Thyristoren zu sperren, wenn der GTO-Strom den Grenzwert ITQ überschreitet.

Ein GTO-Thyristor unterbricht den Strom erst eine gewisse Zeit - die sogenannte Speicherzeit - nach dem Abschaltbefehl. Während der Speicherzeit kann der Anodenstrom des GTO-Thyristors weiter steigen. Das Verfahren der prädiktiven Löschsperre gemäß DE-OS 37 27 996 schätzt daher den im Abschaltaugenblick des GTO-Thyristors zu erwartenden Strom aus dem aktuellen GTO-Strom und dessen aktuellen Stromanstieg (di/dt) während der Speicherzeit voraus und vergleicht ihn mit ITQ.

Statt des GTO-Stromes kann beim bekannten Verfahren der Laststrom des Stromrichters verwendet werden, da dieser ohnehin für Regelzwecke gemessen wird und sich meistens nur wenig vom GTO-Strom unterscheidet. Die di/dt-Werte der GTO-Ströme werden dagegen durch Erfassungsspulen (Stromanstiegserfassungseinrichtungen) für jeden GTO-Thyristor einzeln gemessen.

Zur Vermeidung störender parasitärer Induktivitäten können die di/dt-Erfassungsspulen nur so eingebaut werden, daß sie auch den Strömen der Entlastungsnetzwerke für die GTO-Thyristoren ausgesetzt sind. Die Entlastungsnetzwerke sind LC-Gebilde (L:Induktivität, C:Kondensa tor), die je nach verwendeter Schaltung des Leistungsteils mehr oder weniger stark schwingen. Da die di/dt-Erfassungsspulen beim bekannten Verfahren die Beschaltungsströme mitmessen, kann es in der Praxis wegen der hohen di/dt-Werte der Beschaltungsschwingungen zu Fehlern bei der Bildung des Löschsperrsignales kommen.

Ist der di/dt-Wert des Beschaltungsstromes in gleicher Richtung wie derjenige des GTO-Stromes wirksam, so löst die Löschsperre fälschlich und in unnötiger Weise aus. Diese Fehlauslösungen müssen auf der Ebene der Signalverarbeitung nachträglich wieder herausgefiltert werden. Ist der di/dt-Wert des Beschaltungsstromes demjenigen des GTO-Stromes entgegengerichtet, so geht die Löschsperre von einem zu kleinen di/dt-Wert aus und löst deshalb gegebenenfalls nicht aus, obwohl dies erforderlich wäre. Ein zerstörungsrisiko für den betroffenen GTO-Thyristor ist die Folge.

Der Erfindung liegt die Aufgabe zugrunde, ein Verfahren zur Bildung eines Löschsperrsignals für abschaltbare Leistungshalbleiter anzugeben, das in einfacher Art und Weise eine maximale Ausnutzung ohne Zerstörungsrisiko für die Leistungshalbleiter gewährleistet und Funktionsstörungen durch Beschaltungsströme in Entlastungsnetzwerken für die Leistungshalbleiter weitgehend vermeidet. Desweiteren soll eine Vorrichtung hierzu entwickelt werden.

Diese Aufgabe wird bezüglich des Verfahrens zur Bildung eines Löschsperrsignales für abschaltbare Leistungshalbleiter in Stromrichtern zur Unterdrückung von unzulässigen Löschversuchen dadurch gelöst, daß ein Löschsperrsignal dann abgegeben wird, wenn die Summe aus dem aktuellen Laststrom einer Phase des Stromrichters und dem Produkt der zeitlichen Ableitung des Laststromes und der maximalen Speicherzeit eines Leistungshalbleiters größer als der maximale, periodisch abschaltbare Anodenstrom eines Leistungshalbleiters ist.

Die Aufgabe wird bezüglich der Vorrichtung durch die im Anspruch 7 gekennzeichneten Merkmale gelöst.

Die mit der Erfindung erzielbaren Vorteile bestehen insbesondere darin, daß die analogen Meßwerte der Stromanstiegserfassungseinrichtungen in den Leistungshalbleiter-Zweigen (GTO-Zweigen) nicht direkt zur Erzeugung der prädiktiven Löschsperre beitragen und somit die störenden Einflüsse der Beschaltungstransienten (di/dt-Werte der Beschaltungsströme in den Entlastungsnetzwerken für die Leistungshalbleiter bzw. GTO-Thyristoren) entfallen. Die digital gebildete Kurzschlußmeldung wird wegen der relativ hohen Komparatorschwelle des einzusetzenden Vergleichers durch Beschaltungsströme kaum gestört. Darüberhinaus wird durch die Erfindung der Aufwand für die Meßwerterfassung vermindert, denn es genügt eine einzige Stromanstiegserfassungseinrichtung für jeden zwei GTO-Thyristoren aufweisenden Strang eines dreiphasigen GTO-Wechsrichters in Brückenschaltung.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert.

Es zeigen:

Fig. 1 das Schema eines GTO-Wechselrichters mit verschiedenen Meßeinrichtungen für die Bildung von Löschsperrsignalen,

Fig. 2 eine Auswerteelektronik zur Bildung von Löschsperrsignalen,

Fig. 3, 4 und 5 Varianten der Auswerteelektronik.

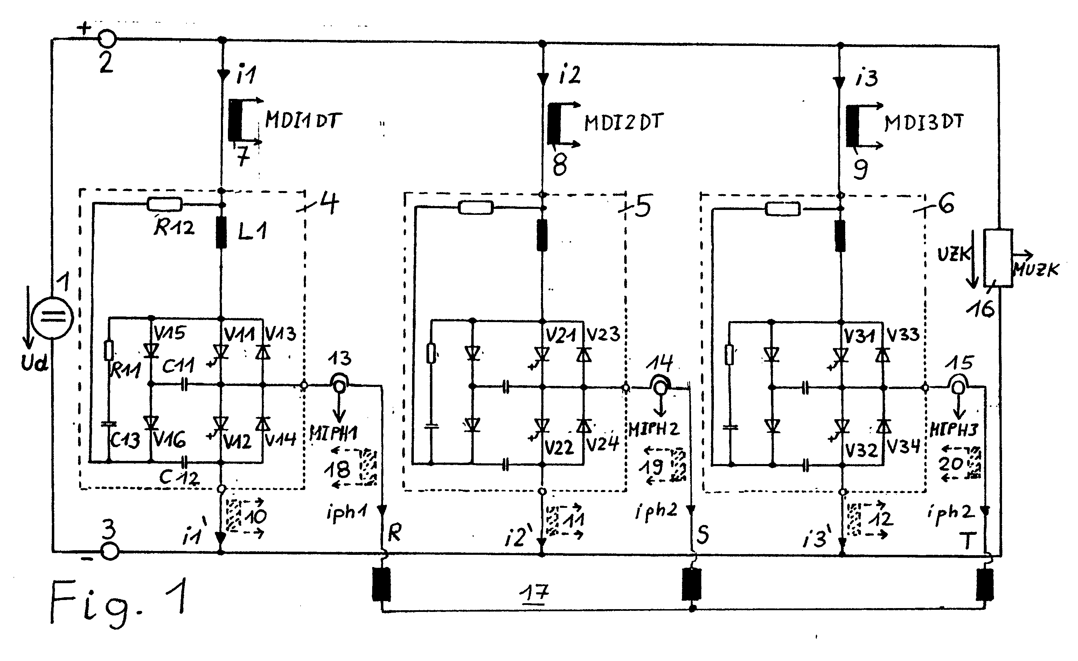

In Fig. 1 ist das Schema eines GTO-Wechselrichters mit verschiedenen Meßeinrichtungen für die Bildung von Löschsperrsignalen dargestellt. Es ist eine Gleichspannungsquelle 1 zu erkennen, zwischen deren positivem Pol 2 bzw. negativem Pol 3 drei Stränge 4, 5, 6 eines an einem Gleichspannungszwischenkreis zu betreibenden, dreiphasigen GTO-Wechselrichters geschaltet sind. Der in Drehstrom-Brückenschaltung aufgebaute GTO-Wechselrichter weist sechs Zweige mit jeweils einem GTO-Thyristor V11, V21, V31, V12, V22, V32 (allgemein: abschaltbare Leistungshalbleiter) als Hauptventile auf. Jedem GTO-Thyristor liegt eine Diode V13, V23, V33, V14, V24, V34 anti-parallel. Die Steuereinrichtung zum Zünden und Löschen der GTO-Thyristoren ist aus Gründen der Übersichtlichkeit in Fig. 1 nicht dargestellt.

Jeder Strang 4, 5, 6 des GTO-Wechselrichters weist ein Entlastungsnetzwerk, bestehend aus einer allgemein bekannten Anordnung aus Dioden V15, V16...., Kondensatoren C11, C12, C13..., Widerständen R11, R12,.... und Drosseln L1... auf, wobei in Fig. 1 aus Gründen der Übersichtlichkeit nur die Bauteile des Entlastungsnetzwerkes für Strang 4 beziffert sind. Der genaue Aufbau der Entlastungsnetzwerke ist für das Verständnis und die Funktionsweise des Verfahrens zur Bildung von Löschsperrsignalen unwesentlich und in Fig. 1 lediglich beispielhaft angedeutet. Der GTO-Wechselrichter kann auch mit anders aufgebauten, allgemein bekannten Entlastungsnetzwerken ausgerüstet sein.

Die vom positiven Pol 2 der Gleichspannungsquelle 1 mit der Gleichspannung Ud in die Stränge 4, 5, 6 fließenden Zweigströme sind mit i1, i2, i3 und die von den Strängen 4, 5, 6 zum negativen Pol 3 fließenden Zweigströme sind mit i1′, i2′, i3′ bezeichnet. Zur Erfassung der Stromanstiegsmeßwerte MDI1DT, MDI2DT, MDI3DT der Zweigströme i1, i2, i3 sind Stromanstiegserfassungseinrichtungen 7, 8, 9 vorgesehen. Alternativ zu den Einrichtungen 7, 8, 9 können Stromanstiegserfassungseinrichtungen 10, 11, 12 zur Erfassung der Stromanstiegsmeßwerte der Zweigströme i1′, i2′, i3′ vorgesehen sein.

Jeweils am gemeinsamen Verbindungspunkt der beiden GTO-Zweige eines jeden Stranges 4, 5, 6 greifen die drei Wechselspannungsausgänge des Wechselrichters zur Bildung der drei Phasen R, S, T an. Zur Erfassung der drei wechselspannungsseitig fließenden Lastströme (Phasenströme) iph1, iph2, iph3 sind Stromerfassungseinrichtungen 13, 14, 15 vorgesehen. Die entsprechenden Laststrommeßwerte sind mit MIPH1, MIPH2, MIPH3 bezeichnet. Zusätzlich können - müssen jedoch nicht - an den drei Wechselspannungsausgängen des Wechselrichters Stromanstiegserfassungseinrichtungen 18, 19, 20 zur Erfassung der Stromanstiegsmeßwerte der Lastströme iph1, iph2, iph3 vorgesehen sein. Die am Wechselrichter anliegende Zwischenkreisgleichspannung UZK wird mit Hilfe einer Spannungserfassungseinrichtung 16 erfaßt. Der entsprechende Zwischenkreisgleichspannungsmeßwert ist mit MUZK bezeichnet.

An den drei Wechselspannungsausgängen des Wechselrichters ist eine dreiphasige, induktive Last 17 angeschlossen, beispielsweise eine als Traktionsantrieb dienende Asynchronmaschine.

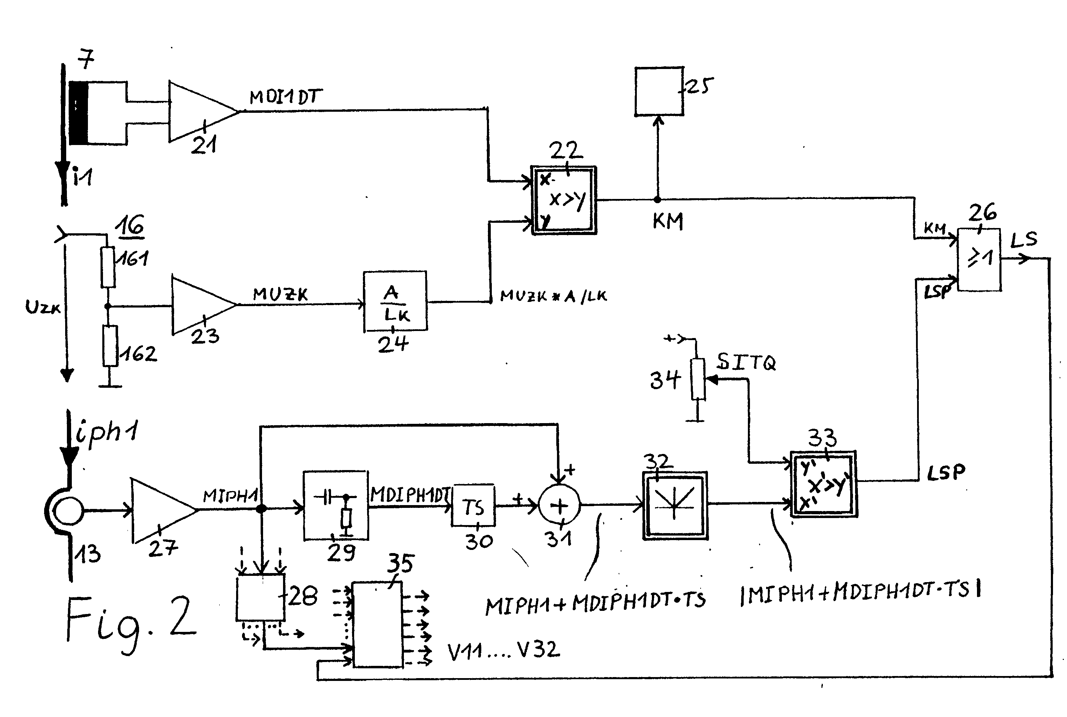

In Fig. 2 ist eine Auswerteelektronik zur Bildung von Löschsperrsignalen dargestellt. Dabei ist beispielhaft lediglich die einem Strang - im Beispiel Strang 4 - zugeordnete Anordnung gezeigt. Die den weiteren Strängen zugeordneten Anordnungen sind gleichartig aufgebaut. Es ist die an einem Verstärker 21 angeschlossene, zur Bildung des Stromanstiegmeßwertes MDI1DT des Zweigstromes i1 dienende stromanstiegserfassungseinrichtung 7 zu erkennen. Der Wert MDI1DT wird dem x-Eingang eines Vergleichers 22 zugeleitet.

Die Spannungserfassungseinrichtung 16 zur Messung der Zwischenkreisgleichspannung UZK ist beispielsweise als Spannungsteiler ausgebildet (zwei Widerstände 161, 162 sind zwischen den Polen 2, 3 angeordnet), wobei der Spannungsteilerabgriff (gemeinsamer Verbindungspunkt beider Widerstände 161, 162) an einen Verstärker 23 angeschlossen ist, dem der Zwischenkreisgleichspannungsmeßwert MUZK ausgangsseitig entnehmbar ist. Dieser Wert MUZK wird in einer Recheneinheit 24 durch LK dividiert und mit A multipliziert, wobei LK die gesamte Kommutierungsinduktivität einer Phase und A einen vorgebbaren Bewertungsfaktor zwischen 0 und 1 darstellen.

Der Faktor A/LK ist in der Praxis in die Verstärkung des Verstärkers 23 "eingeeicht", so daß die zusätzliche Recheneinheit 24 lediglich zur Verdeutlichung dargestellt ist.

Der Ausdruck MUZK • A/LK liegt dem y-Eingang des Vergleichers 22 an. Der Vergleicher 22 gibt immer dann eine Kurzschlußmeldung KM ab, wenn der Wert des am x-Eingang liegenden Signals den Wert des am y-Eingang anstehenden Signals übersteigt, d.h. wenn MDI1DT größer als MUZK • A/LK ist. Die Kurzschlußmeldung kM wird einer in diesem Zusammenhang nicht weiter interessierenden Kurzschlußschutzeinrichtung 25 sowie dem ersten Eingang eines ODER-Gatters 26 zugeleitet.

Die den Laststrom iph1 messende Stromerfassungseinrichtung 13 ist mit einem Verstärker 27 verbunden. Der dem Verstärker 27 entnehmbare Laststrommeßwert MIPH1 wird einer in diesem Zusammenhang nicht weiter interessierenden Regeleinrichtung 28, einem Differenzierglied 29 und einer Additionsstelle 31 zugeleitet. Der dem Differenzierglied 29 entnehmbare Laststromanstiegsmeßwert MDIPH1Dt wird mit Hilfe eines Multiplizierers 30 mit TS multipliziert, wobei TS die maximale Speicherzeit eines GTO-Thyristors darstellt. Auch hierbei wird der multiplikative konstante Faktor TS in der Praxis in geeigneter Weise im Differenzierglied 29 "eingeeicht", so daß der zusätzliche Multiplizierer 30 lediglich zur Verdeutlichung dargestellt ist. Die Additionsstelle 31 addiert die Werte MIPH1 und MDIPH1DT • TS und führt die gebildete Summe einem Betragsbildner 32 zu. Der Betrag |MIPH1 + MDIPH1 • TS| liegt dem x′-Eingang eines Vergleichers 33 an. Der y′-Eingang dieses Vergleichers 33 wird mit SITQ, dem maximalen, periodisch abschaltbaren Anodenstrom eines GTO-Thyristors, beaufschlagt. Dieser Grenzwert SITQ ist z.B. am Abgriff eines zwischen einer positiven Spannung und Masse geschalteten Potentiometers 34 leicht einstellbar.

Der Vergleicher 33 gibt immer dann eine prädiktive Löschsperre LSP an den zweiten Eingang des ODER-Gatters 26 ab, wenn der Wert des am x′-Eingang liegenden Signals den Wert des am y′-Eingang anstehenden Signals übersteigt, d.h. wenn|MIPH1 + MDIPH1 • TS| größer als SITQ ist. Das ODER-Gatter 26 gibt bei Vorliegen einer Kurzschlußmeldung KM oder einer prädiktiven Löschsperre LSP ein Löschsperrsignal LS an eine Steuereinrichtung 35 zum Zünden und Löschen der GTO-Thyristoren ab, worauf die entsprechenden GTO-Thyristoren V11 und V12 auch dann nicht gelöscht werden, wenn der Steuereinrichtung 35 entsprechende Löschsignale von der Regeleinrichtung 28 übermittelt werden.

In Fig. 2 ist angedeutet, daß die Steuereinrichtung 35 ausgangsseitig mit den Steueranschlüssen aller GTO-Thyristoren V11...V32 verbunden ist und eingangsseitig Signale sowohl von der Regeleinrichtung 28 als auch vom ODER-Gatter 26 (bzw. von den weiteren ODER-Gattern) der Auswerteelektronik empfängt. Die Regeleinrichtung 28 wiederum erhält u. a. Laststrommeßwerte MIPH1....MIPH3 und bildet hieraus entsprechende Zünd- und Löschsignale für die einzelnen GTO-Thyristoren.

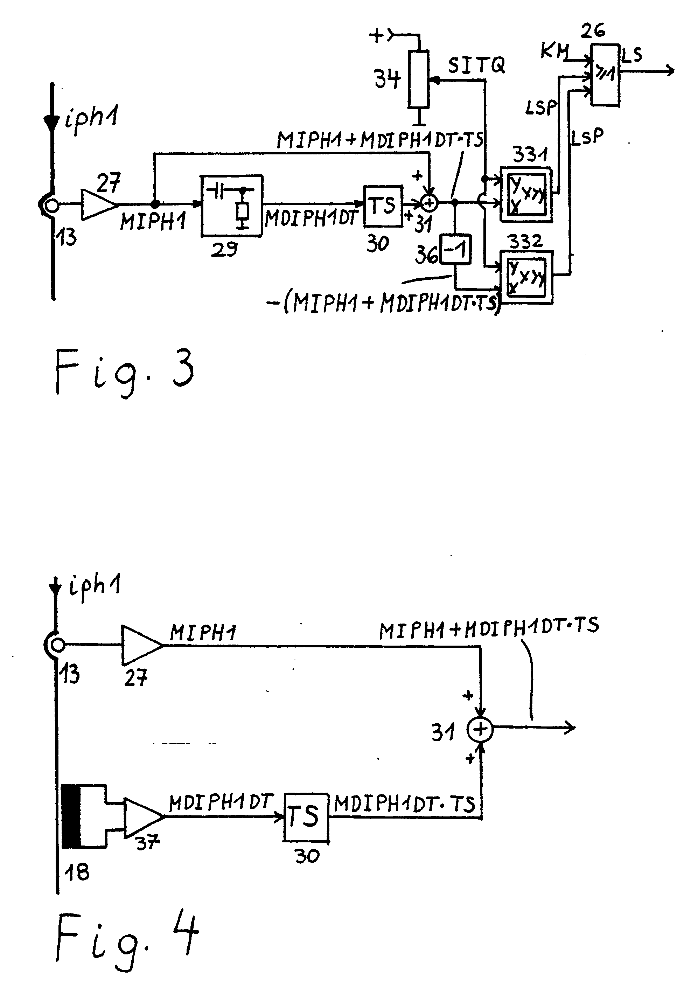

In Fig. 3 ist eine erste Variante der Auswerteelektronik dargestellt. Bei dieser Variante wird auf die Betragsbildung der von der Additionsstelle 31 gebildeten Summe MIPH1 + MDIPH1DT • TS verzichtet, d.h. der Betragsbildner 32 gemäß Fig. 2 entfällt. Stattdessen wird die Summe MIPH1 + MDIPH1DT • TS für die den Strom vom Gleichspannungszwischenkreis zur Last führenden GTO-Thyristoren V11, V21, V31 direkt einem ersten Vergleicher 331 und die über einen Inverter 36 invertierte Summe -(MIPH1 + MDIPH1DT • TS) für die den Strom von der Last zum Gleichspannungszwischenkreis führenden GTO-Thyristoren V12, V22, V32 einem zweiten Vergleicher 332 zugeleitet. Den Vergleichern 331, 332 liegt als zweite Eingangsgröße jeweils SITQ, der maximale periodisch abschaltbare Anodenstrom eines GTO an. Ausgangsseitig führen die Vergleicher 331, 332 die prädiktive Löschsperre LSP dem ODER-Gatter 26 zu. Die übrige Anordnung ist wie unter Fig. 2 beschrieben.

In Fig. 4 ist eine zweite Variante der Auswerteelektronik dargestellt. Bei dieser Variante wird auf die Bildung der zeitlichen Ableitung des Signals MIPH1 durch das Differenzierglied 29 verzichtet. Stattdessen wird eine in Fig. 1 gestrichelt angedeutete Stromanstiegserfassungseinrichtung 18 eingesetzt, die über einen nachgeschalteten Verstärker 37 den Laststromanstiegsmeßwert MDIPH1DT abgibt. Dieser mit der Speicherzeit TS multiplizierte Wert wird der Additionsstelle 31 zugeführt, der andererseits der von der Anordnung Stromerfassungseinrichtung 13/Verstärker 27 gebildete Laststrommeßwert MIPH1 anliegt. Die übrige Anordnung ist wie unter Fig. 2 beschrieben.

Bei einer dritten, bereits in Fig. 1 angedeuteten Variante werden nicht die Stromanstiegsmeßwerte MDI1DT, MDI2DT, MDI3DT der die Ströme vom Gleichspannungszwischenkreis zur Last führenden GTO-Thyristoren V11, V21, V31, sondern alternativ hierzu die Stromanstiegsmeßwerte der die Ströme von der Last zum Gleichspannungszwischenkreis führenden GTO-Thyristoren V12, V22, V32 erfaßt. Dies ist bereits in Fig. 1 durch die alternativ möglichen Stromanstiegserfassungseinrichtungen 10, 11, 12 angedeutet.

Nachfolgend wird die Funktionsweise der Auswerteelektronik zur Bildung von Löschsperrsignalen beschrieben.

Die Bildung eines Löschsperrsignales ist eine Schutzmaßnahme, um den schädlichen Folgen von Überströmen in den GTO-Thyristoren eines Stromrichters entgegenzuwirken. Die Ursachen der Überströme lassen sich in drei Hauptfälle untergliedern. Beim ersten Fall (= Überlastung) ist der Leistungsteil des Stromrichters selbst in Ordnung. Durch falsche Steuerung des Stromrichters (z.B. infolge unzureichender Steuergesetze oder Fehler in der Leittechnik) entstehen jedoch zu hohe Lastströme. Beim zweiten Fall (= Ausgangskurzschluß) sind sowohl Leistungsteil als auch Leittechnik des Stromrichters in Ordnung. Die Last (Motor) oder die Verbindungsleitungen zwischen Stromrichter und Last sind jedoch fehlerhaft. Beim dritten Fall (= innerer Kurzschluß) ist entweder der Leistungsteil des Stromrichters selbst defekt oder es entsteht ein Kurzschluß infolge eines Überschlages oder infolge eines Steuerungsfehlers (beide GTO-Thyristoren einer Phase sind gleichzeitig eingeschaltet). In allen drei Fällen muß das Löschsperrsignal LS ausgelöst werden.

Bei Überlastung (erster Fall) und Ausgangskurzschluß (zweiter Fall) fließen die die GTO-Thyristoren gefährdenden Überströme über die Ausgangsstromwandler (= Stromerfassungseinrichtungen 13 bis 15). Damit ist es prinzipiell möglich, aus den dort gemessenen Werten auf die Notwendigkeit einer Aktivierung der Löschsperre zu schließen. Im ungestörten Leitzustand der GTO-Thyristoren sind Laststrom und GTO-Strom (Zweigstrom) gleich. Daher kann für die prädiktive Löschsperre in den beiden Fällen Überlastung und Ausgangskurzschluß der Laststrom den GTO-Strom (Zweigstrom) als Eingangsgröße ersetzen. Deshalb gilt als erste Regel, daß ein Löschsperrsignal LS dann abgegeben wird, wenn der Betrag der Summe aus dem aktuellen Laststrom der Phase und dem Produkt von dessen zeitlicher Ableitung (Stromanstieg) und der maximalen Speicherzeit eines GTO-Thyristors größer als das zulässige Abschaltvermögen des GTO-Thyristors ist. Die Löschsperre wird also aktiviert wenn $iph + diph/dt \cdot TS$ größer als $ITQ$ ist. Die Steilheit (zeitliche Ableitung) des Laststromes $diph/dt$ kann z.B. durch elektronische Differentiation (Differenzierglied 29) aus dem Meßwert des Laststromes gewonnen werden (Alternative: siehe Fig. 4). Dabei muß die Genauigkeit des $diph/dt$-Signals u. a. bei hohen $di/dt$-Werten nicht sehr groß sein. Das $di/dt$-Signal darf sowohl begrenzt als auch geglättet werden.

Bei innerem Kurzschluß (dritter Fall) muß die Löschsperre Abschaltversuche der überlasteten GTO-Thyristoren solange verhindern, bis die eigentliche Kurzschlußerkennung (Kurzschlußschutzeinrichtung 25) eine Schutzdurchzündung auslöst. Die Kurzschlußschutzeinrichtung 25 wird zwar von der Kurzschlußmeldung KM aktiviert, welche aber zur Vermeidung überflüssiger Schutzdurchzündungen verzögert, gefiltert und bewertet werden muß. Die Schutzdurchzündung erfolgt deshalb verzögert. Bei innerem Kurzschluß wird die prädiktive Wirkung der Löschsperre nicht benötigt. Die Tatsache des Kurzschlusses als solche reicht als Auslösekriterium. Die Aktivierung nach der ersten Regel ist bei innerem Kurzschluß unwirksam, da der Kurzschlußstrom nicht über die Ausgangsstromwandler (Stromerfassungseinrichtungen 13 bis 15) fließt. Daher wird zur Auslösung der Löschsperre die vorhandene "schnelle" ungefilterte Kurzschlußmeldung KM herangezogen.

Deshalb gilt als zweite Regel, daß ein Löschsperrsignal LS dann abgegeben wird, wenn die ungefilterte Kurzschlußmeldung KM der Phase vorliegt. Die Kurzschlußmeldung wird dann abgegeben, wenn die aktuelle - mit der Stromanstiegserfassungseinrichtung der Phase gemessene - Steilheit des Zweigstromes einen vorgebbaren Schwellwert überschreitet, der im Grundsatz proportional zur aktuellen Zwischenkreisgleichspannung UZK des Stromrichters ist. Die Löschsperre wird also aktiviert, wenn $di/dt$ größer als UZK $\cdot$ A/LK ist.

Im Regelfall leitet in einer Stromrichterphase zu jedem Zeitpunkt nur einer der beiden GTO-Thyristoren. Lediglich im Falle eines inneren Kurzschlusses oder einer Schutzdurchzündung leiten beide GTO-Thyristoren eines Stranges gleichzeitig. In diesen Sonderfällen benötigen auch beide GTO-Thyristoren gleichzeitig eine Löschsperre. Daher reicht ein auf beide GTO-Thyristoren einer Phase wirkendes Löschsperrsignal aus. Die Auslösekriterien für die Löschsperre müssen dabei aber für beide GTO-Thyristoren einer Phase gleichermaßen geeignet sein. Bei der Kurzschlußmeldung KM ist dies der Fall. Im Fall der prädiktiven Löschsperre nach der ersten Regel wird dies durch die Betragsbildung (Betragsbildner 32) sichergestellt.

Deshalb gilt als dritte Regel, daß ein einziges Löschsperrsignal LS auf beide GTO-Thyristoren einer Brückenphase (Strang) wirkt.

Bei einem Stromrichter in Drehstrombrückenschaltung werden gemäß den vorstehenden Ausführungen getrennte Löschsperrsignale LS für jeden Strang 4, 5, 6 produziert. Dabei müssen nicht notwendigerweise alle drei Laststrommeßwerte MIPH1, MIPH2, MIPH3 einzeln erfaßt werden, es genügt vielmehr die Messung von nur zwei Lastströmen und die Errechnung des dritten Laststromes aus diesen beiden gemessenen Lastströmen gemäß der Beziehung MIPH1 + MIPH2 + MIPH3 = 0.

Bei Traktionswechselrichtern mit Asynchronmaschinen (Fahrmotoren) als Last 17 gilt, daß bei fehlerfreiem Lastkreis die Steilheit der Lastströme $diph/dt$ niemals einen Grenzwert G1 überschreitet. Dieser Grenzwert G1 kann allein aus den Maschinendaten der Last 17 ermittelt werden. Die Lastströme des Traktionswechselrichters setzen sich bei fehlerfreiem Lastkreis im wesentlichen aus den "eigentlichen" Maschinenströmen und den Strömen über die Wicklungskapazitäten der Maschine zusammen. Die Steilheit der "eigentlichen" Maschinenströme wird durch die Streuinduktivität der Maschine in Verbindung mit der Zwischenkreisgleichspannung UZK des Stromrichters und der momentanen EMK (induzierte elektromotorische Kraft) der Maschine bestimmt. Sie beträgt z.B. maximal 5A/µs. Die Steilheit der Ströme über die Wicklungskapazität der Maschine übersteigt üblicherweise ebenfalls nicht 5A/µs. Der Grenzwert G1 kann damit z.B. zu 10 A/µs gewählt werden. Da der Grenzwert G1 derart klein ist, kann die für die Löschsperre benötigte Größe iph + diph/dt • TS abschätzungsweise durch die Größe iph + G1 • TS ersetzt werden, ohne daß dabei die Ausnützung des Stromrichters vermindert wird. Die Löschsperre wird demnach bei fehler freiem Lastkreis und geeignetem Antrieb aktiviert, wenn iph + G1 • TS größer als ITQ ist, wobei der Laststromanstiegsmeßwert durch einen "worst-case-Wert" G1 ersetzt wird.

Tritt im Lastkreis ein Fehler, d.h. eine Veränderung der Schaltungsstruktur, wie z.B. ein Kurzschluß auf, so übertreffen die Steilheiten der Lastströme diph/dt deutlich den Grenzwert G1. Daher kann die Löschsperre im Fall von Ausgangskurzschlüssen oder Erdschlüssen ausgelöst werden, wenn diph/dt größer als ein Grenzwert G2 ist, wobei der Grenzwert G2 größer als der Grenzwert G1 ist, jedoch deutlich unter dem für die Kurzschlußschutzeinrichtung 25 relevanten Schwellwert liegt. Ein typischer Grenzwert G2 ist z.B. 25 A/µs.

Bei geeigneten Anlagen kann damit das Auslösekriterium der Löschsperre |MIPH + MDIPH • TS| ≧ SITQ durch die beiden Kriterien |MIPH| ≧ SITQ - G1 • TS und |MDIPHDT| ≧ G2 ersetzt werden, wobei beide Kriterien im Sinne einer ODER-Verknüpfung zu verbinden sind.

Der Vorteil dieser vorstehend beschriebenen vierten Variante liegt in der einfachen Realisierbarkeit. An die Stelle einer analogen Verarbeitung der Ableitung des Laststrommeßwertes tritt eine Schwellwert-Überwachung dieser Größe. Damit werden die Anforderungen an die Qualität der Differentiation der Laststrommeßwerte geringer. Außerdem nimmt vorteilhaft der Bedarf an analoger Signalverarbeitung zugunsten digitaler Verarbeitung ab.

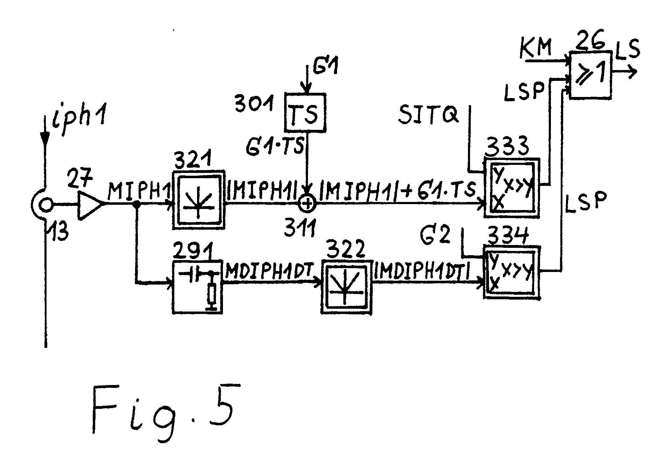

In Fig. 5 ist diese vierte Variante der Auswerteelektronik dargestellt. Die Additionsstelle 311 empfängt den Betrag des Laststrommeßwertes |MIPH1| und die Größe G1 • TS, wobei der Betrag des Laststrommeßwertes |MIPH1| mittels Stromerfassungseinrichtung 13/Verstärker 27/Betragsbildner 321 und die Größe G1 • TS mittels des Multiplizierers 301 gebildet werden. Die Summe |MIPH1| +

G1 • TS gelangt zum Vergleicher 333. Der Vergleicher 333 gibt eine prädiktive Löschsperre LSP an das ODER-Gatter 26 ab, wenn die Summe |MIPH1| + G1 • TS größer als SITQ ist.

Der mittels eines Differenziergliedes 291 aus dem Laststrommeßwert MIPH1 gebildete Laststromanstiegsmeßwert MDIPH1DT gelangt über den Betragsbildner 322 zum Vergleicher 334. Der Vergleicher 334 gibt eine prädiktive Löschsperre LSP an das ODER-Gatter 26 ab, wenn der Betrag |MDIPH1DT| den Grenzwert G2 überschreitet. Die übrige Anordnung ist wie unter Fig. 2 beschrieben.

## Ansprüche

1. Verfahren zur Bildung eines Löschsperrsignals (LS) für abschaltbare Leistungshalbleiter (V11...V32) in Stromrichtern zur Unterdrückung von unzulässigen Löschversuchen, wobei ein Löschsperrsignal dann abgegeben wird, wenn die Summe aus dem aktuellen Laststrom (iph) einer Phase des Stromrichters und dem Produkt der zeitlichen Ableitung des Laststromes (diph/dt) und der maximalen Speicherzeit (TS) eines Leistungshalbleiters größer als der maximale, periodisch abschaltbare Anodenstrom (ITQ) eines Leistungshalbleiters ist.

2. Verfahren nach Anspruch 1, dadurch gekennzeichnet, daß der Betrag der Summe gebildet wird.

3. Verfahren nach Anspruch 1, dadurch gekennzeichnet, daß die Summe bei Lastströmen (iph) mit Flußrichtung von einer Last (17) zum Stromrichter invertiert wird.

4. Verfahren nach den Ansprüchen 1 und 2 oder 1 und 3, dadurch gekennzeichnet, daß ein einziges Löschsperrsignal (LS) auf beide Leistungshalbleiter (V11..V32) einer Brückenphase eines Stromrichters in Brückenschaltung wirkt.

5. Verfahren nach einem der Ansprüche 1 bis 4, dadurch gekennzeichnet, daß ein Löschsperrsignal dann abgegeben wird, wenn die zeitliche Ableitung eines Zweigstromes (di/dt) des Stromrichters einen Schwellwert proportional zu der dem Stromrichter zugeführten Spannung (UZK) überschreitet und folglich ein Kurzschluß des Stromrichters vorliegt.

6. Verfahren nach Anspruch 5, dadurch gekennzeichnet, daß der Schwellwert umgekehrt proportional zur gesamten Kommutierungsinduktivität (LK) einer Phase des Stromrichters ist.

7. Verfahren nach wenigstens einem der Ansprüche 1 bis 6, dadurch gekennzeichnet, daß als zeitliche Ableitung des Laststromes (diph/dt) ein aus den Maschinendaten der Last (17) gebildeter erster Grenzwert (G1) herangezogen wird.

8. Verfahren nach Anspruch 7, dadurch gekennzeichnet, daß ein Löschsperrsignal abgegeben wird, wenn die zeitliche Ableitung des Laststromes (diph/dt) einen zweiten Grenzwert (G2) überschreitet, wobei der zweite Grenzwert (G2) größer als der erste Grenzwert (G1) und kleiner als der für den Kurzschlußschutz relevante Schwellwert ist.

9. Vorrichtung zur Durchführung des Verfahrens nach einem der Ansprüche 1 bis 8, dadurch gekennzeichnet, daß ein erster Vergleicher (22) vorgesehen ist, der eine Kurzschlußmeldung (KM) abgibt, wenn der von einer Stromanstiegserfassungeinrichtung (7) gemessene Stromanstiegsmeßwert (MDI1DT) eines Zweigstromes ($i1...i3, i1'.... i3'$) die von einer Spannungserfassungseinrichtung (16) gemessene und mittels einer Recheneinheit (23,24) umgekehrt proportional zur Kommutierungsinduktivität (LK) bewertete Zwischenkreisgleichspannung (MUZK $\cdot$ A/LK) übersteigt.

10. Vorrichtung nach Anspruch 9, dadurch gekennzeichnet, daß in jedem Strang eines Stromrichters in Drehstrombrückenschaltung lediglich eine Stromanstiegserfassungseinrichtung (7,8,9 oder 10,11,12) vorgesehen ist.

11. Vorrichtung nach Anspruch 9 und/oder 10, dadurch gekennzeichnet, daß ein zweiter Vergleicher (33, 331) vorgesehen ist, der eine prädiktive Löschsperre (LSP) abgibt, wenn die Summe aus einem mittels einer Stromerfassungseinrichtung (13, 14, 15) gemessenen Laststrommeßwert (MIPH1) einer Phase des Stromrichters und dem Produkt aus dem entsprechenden Laststromanstiegsmeßwert (MDIPH1DT) mit der maximalen Speicherzeit (TS) eines Leistungshalbleiters den maximalen, periodisch abschaltbaren Anodenstrom (SITQ) eines Leistungshalbleiters übersteigt.

12. Vorrichtung nach Anspruch 11, dadurch gekennzeichnet, daß der Laststromanstiegsmeßwert (MDIPH1DT) mittels eines Differenziergliedes (29) aus dem Laststrommeßwert (MIPH1) gebildet wird.

13. Vorrichtung nach Anspruch 11, dadurch gekennzeichnet, daß der Laststromanstiegsmeßwert (MDIPH1DT) mittels einer Stromanstiegserfassungseinrichtung (18,19,20) erfaßt wird.

14. Vorrichtung nach Anspruch 11, dadurch gekennzeichnet, daß ein Betragsbildner (32) zur Bildung des Betrages der Summe vorgesehen ist.

15. Vorrichtung nach Anspruch 11, dadurch gekennzeichnet, daß ein dritter, eine prädiktive Löschsperre (LSP) abgebender Vergleicher (332) vorgesehen ist, dem die Summe über einen Inverter (36) zugeleitet wird.

16. Vorrichtung nach wenigstens einem der Ansprüche 9 bis 15, dadurch gekennzeichnet, daß ein ODER-Gatter (26) vorgesehen ist, das ein Löschsperrsignal (LS) abgibt, wenn eingangsseitig eine Kurzschlußmeldung und/oder eine prädiktive Löschsperre (LSP) anliegen.

17. Vorrichtung nach Anspruch 9, dadurch gekennzeichnet, daß ein vierter Vergleicher (333) vorgesehen ist, der eine prädiktive Löschsperre (LSP) abgibt, wenn die Summe aus dem Laststrommeßwert (MIPH1) einer Phase des Stromrichters und dem Produkt aus einem ersten Grenzwert (G1) und der maximalen Speicherzeit (TS) eines Leistungshalbleiters den maximalen, periodisch abschaltbaren Anodenstrom (SITQ) eines Leistungshalbleiters übersteigt.

18. Vorrichtung nach Anspruch 17, dadurch gekennzeichnet, daß ein fünfter Vergleicher (334) vorgesehen ist, der eine prädiktive Löschsperre (LSP) abgibt, wenn der Laststromanstiegsmeßwert (MDIPH1DT) einer Phase des Stromrichters einen zweiten Grenzwert (G2) übersteigt.

19. Vorrichtung nach wenigstens einem der Ansprüche 9 bis 18, dadurch gekennzeichnet, daß bei Einsatz eines Stromrichters in Drehstrombrückenschaltung lediglich zwei Stromerfassungseinrichtungen (13, 14) zur Messung von zwei Lastströmen (iph1, iph2) vorgesehen sind und der dritte Laststrom (iph3) aus den beiden gemessenen Lastströmen (iph1, iph2) gebildet wird.

Fig. 1

EP 0 416 488 A2

Fig. 2

EP 0 416 488 A2

Fig. 3

Fig. 4

Fig. 5